# EUROPEAN PATENT SPECIFICATION

(11) **EP 3 690 891 B1**
(45) Date of publication and mention of the grant of the patent: **17.01.2024**
(21) Application number: 18862272.4
(22) Date of filing: 06.09.2018
(51) Int. Cl.: G21C 3/58, G21C 3/16, G21C 3/18, G21C 3/38, G21C 3/07, G21C 3/02, G21C 3/326, G21C 5/02

(54) **FUEL ROD AND FUEL ASSEMBLY**
BRENNSTOFF UND BRENNSTOFFANORDNUNG
TIGE DE COMBUSTIBLE ET ENSEMBLE DE COMBUSTIBLE

(30) Priority: 28.09.2017 CN 201710898918
(43) Date of publication of application: 05.08.2020
(73) Proprietor: Hualong Pressurized Water Reactor Technology Corporation, Ltd., Beijing 100036 (CN)
(72) Inventor: MA, Zirong, Beijing 100036 (CN); SU, Jian, Beijing 100036 (CN); CHEN, Jun, Beijing 100036 (CN)
(74) Representative: Studio Torta S.p.A.
(86) International application number: PCT/CN2018/104285
(87) International publication number: WO 2019/062507

(56) References cited:
- EP-A1- 2 088 600
- EP-A1- 2 088 600
- EP-A2- 0 315 929
- CN-A- 101 572 127
- CN-A- 104 952 492
- CN-B- 101 572 127
- CN-U- 207 489 482
- JP-A- H11 133 178
- JP-A- H11 174 179
- US-B1- 6 445 759

## Description

### TECHNICAL FIELD

The present disclosure relates to the field of nuclear power technology, in particular to a fuel rod and a fuel assembly.

### BACKGROUND

With the continuous development of society, the demand for electricity in people's lives is growing. With the continuous improvement of science and technology, nuclear power generation has become an important way of generating electricity.

Nuclear power generation has the advantage of producing less pollution and having abundant resources. In the prior art, nuclear power plants typically generate electricity by means of a nuclear reaction of a fuel rod. However, due to the large difference in the enrichment of the fuel rod, the fuel economy of the fuel rod is poor.

CN 101572127 teaches a nuclear fuel rod and a nuclear fuel assembly with uranium oxide fuel pellets and gadolinium containing fuel pellets.

### SUMMARY

It is an object of embodiments of the present disclosure to provide a fuel rod and a fuel assembly, which have reducing difference in the enrichment of the fuel rods and improving fuel economy of the fuel rods.

In order to achieve the above object, an embodiment of the present disclosure provides a fuel rod, comprising:
a first uranium pellet, a gadolinium pellet and a second uranium pellet, wherein the first uranium pellet, the gadolinium pellet and the second uranium pellet are each of a cylindrical shape, an end face of an end of the gadolinium pellet is connected to an end face of an end of the first uranium pellet, and an end face of an opposite end of the gadolinium pellet is connected to an end face of an end of the second uranium pellet, and wherein the difference between an enrichment of the gadolinium pellet and an enrichment of the first uranium pellet is 0.5%, and the difference between an enrichment of the gadolinium pellet and an enrichment of the second uranium pellet is 0.5%.

Optionally, lengths of the first uranium pellet and the second uranium pellet are both in the range of 75 to 460 mm.

Optionally, the lengths of the first uranium pellet and the second uranium pellet are both 228.6 mm.

Optionally, enrichments of the gadolinium pellet, the first uranium pellet and the second uranium pellet are all less than or equal to 5%.

Optionally, a mass percentage of gadolinium (III) oxide in the gadolinium pellet is in the range of 4% to 12%.

An embodiment of the present disclosure also provide a fuel assembly comprising N fuel rods above-mentioned, in which N is an integer greater than or equal to 1. Optionally, the lengths of first uranium pellets in two asymmetrically positioned fuel rods of the N fuel rods are different, and the lengths of second uranium pellets in two asymmetrically positioned fuel rods of the N fuel rods are different.

Optionally, a difference between the enrichments of the first uranium pellets in two asymmetrically positioned fuel rods of the N fuel rods is less than or equal to 0.5%, and a difference between enrichments of the second uranium pellets in two asymmetrically positioned fuel rods of the N fuel rods is less than or equal to 0.5%. Optionally, the fuel assembly further comprises a gadolinium fuel rod and a uranium dioxide fuel rod, wherein the N fuel rods are N gadolinium fuel rods, and a difference between an enrichment of the N gadolinium fuel rods and an enrichment of the uranium dioxide fuel rod is less than or equal to 0.5%.

### BRIEF DESCRIPTION OF THE DRAWINGS

Fig. 1 is a schematic diagram of the structure of a fuel rod according to an embodiment of the present disclosure.
Fig. 2 is a schematic diagram of the relationship between the LOCA limit line and the height of the core active segment according to an embodiment of the present disclosure.
Fig. 3 is a schematic diagram of the relationship between the core power and the height according to an embodiment of the present disclosure.
Fig. 4 is a schematic diagram of the relationship between the peak power and the melting limit of a fuel pellet in a core according to an embodiment of the present disclosure.
Fig. 5 is a schematic diagram of the structure of a fuel assembly according to an embodiment of the present disclosure.
Fig. 6 is a schematic diagram of the distribution of a fuel assembly in a core according to an embodiment of the present disclosure.

### DETAILED DESCRIPTION

The technical solutions in the embodiments of the present disclosure will be described hereinafter in conjunction with the drawings in a clear and complete manner. Obviously, the following embodiments relate to a part of, rather than all of, the embodiments of the present disclosure. Based on these embodiments, a person skilled in the art may, without any creative effort, obtain the other embodiments, which also fall within the scope of the present disclosure.

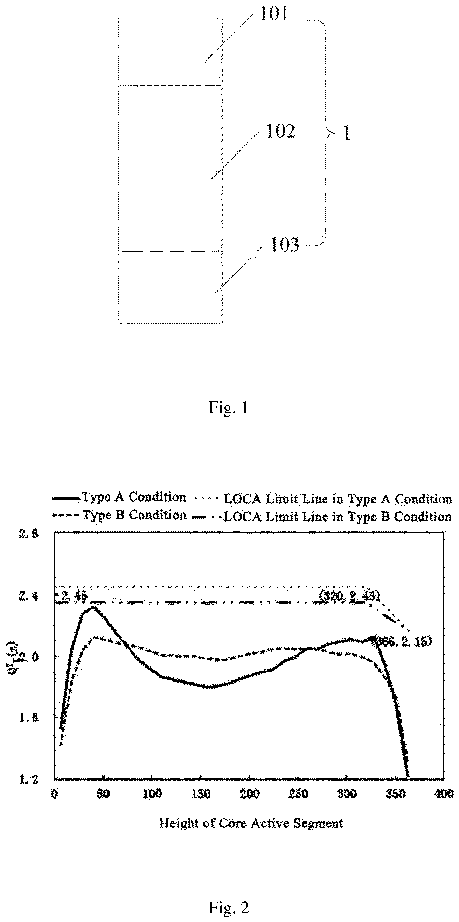

As shown in Fig. 1, an embodiment of the present disclosure provides a fuel rod 1, comprising: a first uranium pellet 101, a gadolinium pellet 102 and a second uranium pellet 103, wherein the first uranium pellet 101, the gadolinium pellet 102 and the second uranium pellet 103 are each of a cylindrical shape, an end face of an end of the gadolinium pellet 102 is connected to an end face of an end of the first uranium pellet 101, and an end face of an opposite end of the gadolinium pellet 102 is connected to an end face of an end of the second uranium pellet 103; and wherein the difference between the enrichment of the gadolinium pellet 102 and the enrichment of the first uranium pellet 101 is less than or equal to 0.5%, and the difference between the enrichment of the gadolinium pellet 102 and the enrichment of the second uranium pellet 103 is less than or equal to 0.5%.

By means of uniformizing the enrichments of the uranium pellet in the gadolinium pellet, in the first uranium pellet and in the second uranium pellet, the fuel rod of the embodiment of the present disclosure reduces not only the difference in enrichment but also the types of enrichment, thereby improving fuel economy.

Moreover, making the difference between an enrichment of the gadolinium pellet 102 and an enrichment of the first uranium pellet 101 to be less than or equal to 0.5%, and the difference between an enrichment of the gadolinium pellet 102 and an enrichment of the second uranium pellet 103 to be less than or equal to 0.5%, is capable of improving the axial power distribution of the fuel rod 1, thereby ensuring that the gadolinium pellet 102 does not melt in the type II transient condition and meets the requirements for use of the fuel rod 1.

In one embodiment, the first uranium pellet 101, the gadolinium pellet 102, and the second uranium pellet 103 are all composed of a plurality of small cylindrical pellets which are stacked together. This arrangement may provide a space for the expansion of the pellet during the reaction of the pellet.

In one embodiment, the first uranium pellet 101, the gadolinium pellet 102, and the second uranium pellet 103 may be cylinders having the same diameter.

In one embodiment, the length of the first uranium pellet 101 may be equal to the length of the second uranium pellet 103; and optionally the length of the gadolinium pellet 102 may be greater than the length of the first uranium pellet 101, and optionally the length of the gadolinium pellet 102 may also be greater than the length of the second uranium pellet 103. It should be noted that if the lengths of the first uranium pellet 101 and the second uranium pellet 103 exceed a certain length, the axial local power of the fuel rod 1 and the core will be increased, and thus it is necessary to select suitable lengths of the first uranium pellet 101 and the second uranium pellet 103.

In one embodiment, the overall length of the fuel rod 1 is not particularly limited, and may be, for example, 365.76 cm or 426.72 cm, or may be greater than 365.76 cm and less than 426.72 cm. Of course, the overall length of the fuel rod 1 may also be greater than 426.72 cm, or the overall length of the rod 1 may also be less than 365.76 cm. It should be noted that the overall length of the fuel rod 1 is not limited to these specific values, and the above 365.76 cm or 426.72 cm is only a typical example of the overall length of the fuel rod 1.

In one embodiment, the lengths of the first uranium pellet 101 and the second uranium pellet 103 are both in the range of 75 to 460 mm. It should be noted that the specific lengths of the first uranium pellet 101 and the second uranium pellet 103 may be determined according to design requirements. For example, when the overall length of the fuel rod 1 is designed to be 365.76 cm, the lengths of the first uranium pellet 101 and the second uranium pellet 103 may be designed to be 22.86 cm. Accordingly, if the overall length of the fuel rod 1 is increased, the lengths of the first uranium pellet 101 and the second uranium pellet 103 may be increased selectively.

In the embodiment of the present disclosure, by setting the lengths of the first uranium pellet and the second uranium pellet to be in the range of 75 to 460 mm, it may be more convenient to manufacture fuel rods and increase the safety margin of the fuel rod throughout its life period.

Optionally, the lengths of the first uranium pellet 101 and the second uranium pellet 103 are both 228.6 mm.

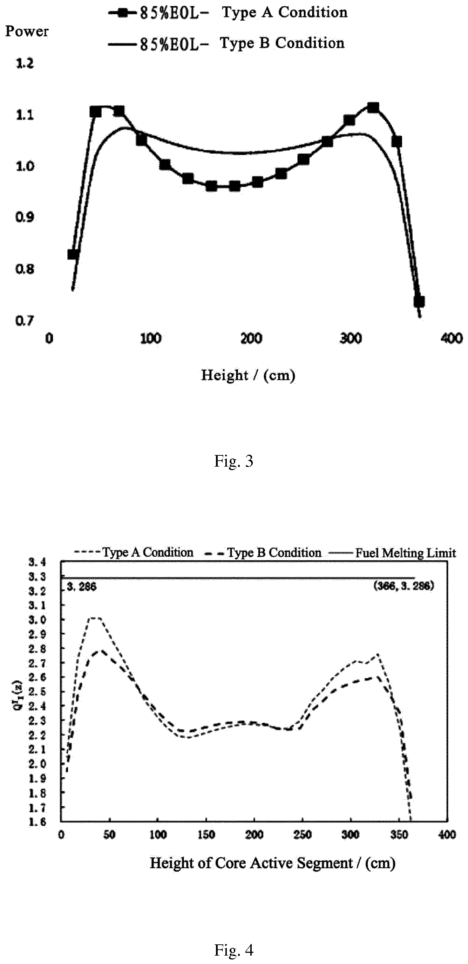

In one embodiment, the enrichments of the gadolinium pellet 102, the first uranium pellet 101, and the second uranium pellet 103 are all less than or equal to 5%. Further, the enrichments of the gadolinium pellet 102, the first uranium pellet 101, and the second uranium pellet 103 may be all 4.45%. For example, a type A condition in which the length of the gadolinium pellet 102 is 3657.6 mm and the enrichment of the gadolinium pellet 102 is 2.5%; or a type B condition in which the lengths of the first uranium pellet 101 and the second uranium pellet 103 are both 228.6 mm, the length of the gadolinium pellet 102 is 3200.4 mm, and the enrichments of the gadolinium pellet 102, the first uranium pellet 101 and the second uranium pellet 103 are all 4.45%. As shown in Fig. 2, the type B condition, as compared to type A condition, may reduce the limit line of Loss-of-Coolant Accident (LOCA), and increase the LOCA margin of the core at both the beginning and the end of the life period of the fuel rod 1. Correspondingly, it may also increase the margin of the Departure from Nucleate Boiling Ratio (DNBR) of the core, thereby improving the safety of the core. It should be noted that the ordinate in Fig. 2 indicates the ratio of the power of the point having the largest energy on the pellet in the core to the average power of the core. Similarly, the ordinate in Fig. 4 indicates the same.

Fig. 3 is a schematic diagram of the relationship between the core power and the height according to an embodiment of the present disclosure, in which the abscissa indicates the height of the fuel rod, and the ordinate indicates the axial power of the fuel rod. As shown in Fig. 3, the type B condition, as compared to the type A condition, may be used to improve the axial power distribution at the end of the life period of the core. Among them, the axial power distribution refers to the power distribution of the core in the height. Moreover, as can be seen from Fig. 3, in the type B condition, the difference in power of the core in the axial direction is not large, thereby making the core safer. In addition, since the powers of the first uranium pellet 101 and the second uranium pellet 103 at the beginning of the life period are increased, the fuel consumptions of the first uranium pellet 101 and the second uranium pellet 103 at both ends of the fuel rod 1 are increased. Therefore, at the end of the core life period, the power of the first uranium pellet 101 and the second uranium pellet 103 at both ends of the fuel rod 1 are lower, thereby reducing the neutron leakage rate at the end of the life period and further improving the fuel economy of the core.

Fig. 4 is a schematic diagram of the relationship between the peak power and the melting limit of a fuel pellet in a core according to an embodiment of the present disclosure. As shown in Fig. 4, the type B condition, as compared to the type A condition, may reduce the maximum line power density of the core in the type II transient, that is, it is possible to reduce the power at the point having the maximum internal power of the core. As can be seen from Fig. 4, the type B condition, as compared to the type A condition, may be used to increase the fuel melting margin by about 6%. Moreover, as shown in Fig. 4, the type B condition, as compared to the type A condition, may be used to reduce the increment in the maximum line power density of the core. By reducing the maximum line power density and the increment of the maximum line power density, it is ensured that the temperature of the fuel pellet in the type II transient does not exceed its melting limit, thus ensuring the safety of the core and the fuel rod 1 during use.

In the embodiment of the present disclosure, the safety performance of the core is improved by the above arrangement, and the fuel rod may be ensured not to melt in the type II transient condition, so that the use of the fuel rod is safer.

In one embodiment, the mass percentage of gadolinium (III) oxide in the gadolinium pellet 102 is 4% to 12%, preferably 8%. When the mass percentage of gadolinium (III) oxide in the gadolinium pellet is 8%, the performance of the gadolinium pellet is more stable and more convenient to use.

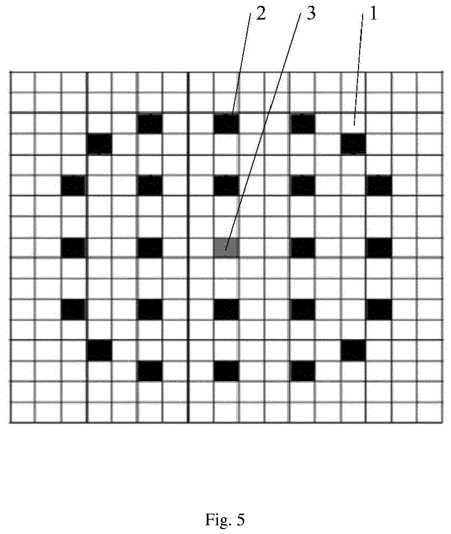

As shown in Fig. 5, an embodiment of the present disclosure further provides a fuel assembly including N fuel rods 1 above-mentioned, wherein N is an integer greater than or equal to 1.

The fuel assembly of the embodiment of the present disclosure may improve the power distribution between the fuel rods within the assembly, i.e., the radial power distribution, by unifying the enrichments of the uranium pellet and the gadolinium pellet in the assembly. Further, by changing the radial power distribution, the safety of the core may be improved.

As shown in Fig. 5, the fuel assembly of the embodiment of the present disclosure may further include a guide tube 2 for guiding the control rod and an instrument tube 3 for placing the meter for monitoring the core.

In one embodiment, when the fuel rod 1 is a gadolinium fuel rod, N may be 4, 8, 12, 16, 20, or 24, and typically the placement of the gadolinium fuel rods in the fuel assembly is symmetrically arranged into group.

In one embodiment, a uranium rod may also be included in the fuel assembly for use in conjunction with the fuel rod 1 above-mentioned. The uranium rods are mainly provided as raw materials for nuclear power generation in nuclear power plants, and gadolinium fuel rods may be used as a supplement to raw materials. Moreover, the gadolinium fuel rods may be used to load flammable poisons and improve the flexibility of fuel loading.

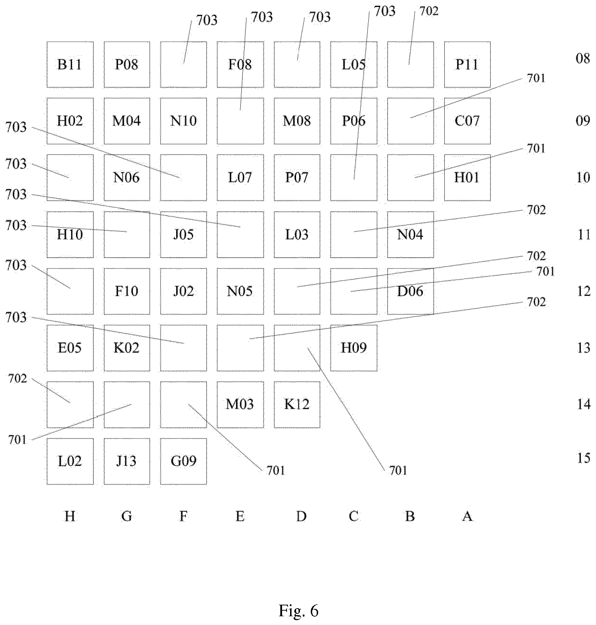

The location of the fuel assembly containing the gadolinium fuel rod in the core may be as shown in Fig. 6. Specifically, the fuel assemblies containing the gadolinium fuel rods may be divided into three groups: the first group contains 8 gadolinium fuel rods, the second group contains 16 gadolinium fuel rods, and the third group contains 20 gadolinium fuel rods. In Fig. 6, the first group is labeled as 701, the second group is labeled as 702, and the third group is labeled as 703. It should be noted that the mark in Fig. 6, such as L02 and J13, indicates the position of the fuel assembly in the core when it was used in the previous cycle. The letters A, B, and C in Fig. 6 are combined with the numbers, such as 08, 09, or 10, to indicate the position of the fuel assembly in the core.

In embodiments of the present disclosure, the fuel assembly comprising the N fuel rods above-mentioned is safer and more efficient in use, has a shorter manufacturing cycle, and is less expensive to manufacture.

In one embodiment, the lengths of the first uranium pellets 101 in two asymmetrically positioned fuel rods of the N fuel rods in the fuel assembly may be different, and the lengths of the second uranium pellets 103 in two asymmetrically positioned fuel rods may be also different. This arrangement may use a fuel rod in which the lengths of the first uranium pellet and the second uranium pellet are different, thereby making the fuel assembly more convenient to use.

In one embodiment, a difference between enrichments of the first uranium pellets 101 in two asymmetrically positioned fuel rods of the N fuel rods in the fuel assembly is less than or equal to 0.5%, and a difference between enrichments of the second uranium pellets 103 in two asymmetrically positioned fuel rods of the N fuel rods is less than or equal to 0.5%. This arrangement allows the enrichments of all the fuel pellets in the fuel assembly to be same or slight different, thereby making the fuel assembly more convenient to use, the fuel economy better, and the safety of the core higher.

In one embodiment, the fuel assembly may further include a gadolinium fuel rod and a uranium dioxide fuel rod, in which the N fuel rods are N gadolinium fuel rods, and a difference between an enrichment of the N gadolinium fuel rods and an enrichment of the uranium dioxide fuel rod is less than or equal to 0.5%. It is possible to make the fuel economy better, and the safety of the core higher, by setting the difference between the enrichments of the N gadolinium fuel rods and the uranium dioxide fuel rods to be less than or equal to 0.5%.

The above description is merely the specific embodiment of the present disclosure, but the scope of the present disclosure is not limited thereto. Moreover, any person skilled in the art would readily conceive of modifications or substitutions within the technical scope of the present disclosure.

Therefore, the protection scope of the present disclosure should be determined by the scope of the attaching claims.

## Claims

1. A fuel rod (1), comprising a first uranium pellet (101), a gadolinium pellet (102) and a second uranium pellet (103), wherein the first uranium pellet (101), the gadolinium pellet (102) and the second uranium pellet (103) are each of a cylindrical shape,
an end face of an end of the gadolinium pellet (102) is connected to an end face of an end of the first uranium pellet (101), and an end face of an opposite end of the gadolinium pellet (102) is connected to an end face of an end of the second uranium pellet (103), and
a difference between an enrichment of the gadolinium pellet (102) and an enrichment of the first uranium pellet (101) is 0.5%, and a difference between an enrichment of the gadolinium pellet (102) and an enrichment of the second uranium pellet (103) is 0.5%,
wherein the first uranium pellet (101), the gadolinium pellet (102), and the second uranium pellet (103) are all composed of a plurality of small cylindrical pellets which are stacked together.

2. The fuel rod (1) of claim 1, wherein lengths of the first uranium pellet (101) and the second uranium pellet (103) are both from 75 to 460 mm.

3. The fuel rod (1) of claim 2, wherein the lengths of the first uranium pellet (101) and the second uranium pellet (103) are both 228.6 mm.

4. The fuel rod (1) of claim 3, wherein enrichments of the gadolinium pellet (102), the first uranium pellet (101) and the second uranium pellet (103) are all less than or equal to 5%.

5. The fuel rod (1) of any one of claims 1 to 4, wherein a mass percentage of gadolinium (III) oxide in the gadolinium pellet (102) is from 4% to 12%.

6. A fuel assembly, comprising N fuel rods (1) of any one of claims 1 to 5, wherein N is an integer greater than or equal to 1.

7. The fuel assembly of claim 6, wherein lengths of first uranium pellets (101) in two asymmetrically positioned fuel rods of the N fuel rods are different, and lengths of second uranium pellets (103) in two asymmetrically positioned fuel rods of the N fuel rods are different.

8. The fuel assembly of claims 6 or 7, wherein a difference between enrichments of the first uranium pellets (101) in two asymmetrically positioned fuel rods of the N fuel rods is less than or equal to 0.5%, and a difference between enrichments of the second uranium pellets (103) in two asymmetrically positioned fuel rods of the N fuel rods is less than or equal to 0.5%.

9. The fuel assembly of claim 8, further comprising a uranium dioxide fuel rod, wherein a difference between an enrichment of the N fuel rods (1) and an enrichment of the uranium dioxide fuel rod is less than or equal to 0.5%.

## Patentansprüche

1. Ein Brennstab (1), umfassend ein erstes Uran-Pellet (101), ein Gadolinium-Pellet (102) und ein zweites Uran-Pellet (103), wobei das erste Uran-Pellet (101), das Gadolinium-Pellet (102) und das zweite Uran-Pellet (103) jeweils eine zylindrische Form aufweisen,
eine Endfläche eines Endes des Gadolinium-Pellets (102) mit einer Endfläche eines Endes des ersten Uran-Pellets (101) verbunden ist und eine Endfläche eines gegenüberliegenden Endes des Gadolinium-Pellets (102) mit einer Endfläche eines Endes des zweiten Uran-Pellets (103) verbunden ist und
ein Unterschied zwischen einer Anreicherung des Gadolinium-Pellets (102) und einer Anreicherung des ersten Uran-Pellets (101) 0,5% beträgt und ein Unterschied zwischen einer Anreicherung des Gadolinium-Pellets (102) und einer Anreicherung des zweiten Uran-Pellets (103) 0,5% beträgt,
wobei das erste Uran-Pellet (101), das Gadolinium-Pellet (102) und das zweite Uran-Pellet (103) alle aus einer Vielzahl kleiner zylindrischer Pellets bestehen, die zusammengestapelt sind.

2. Brennstab (1) nach Anspruch 1, wobei die Längen des ersten Uran-Pellets (101) und des zweiten Uran-Pellets (103) beide jeweils 75 bis 460 mm betragen.

3. Brennstab (1) nach Anspruch 2, wobei die Längen des ersten Uran-Pellets (101) und des zweiten Uran-Pellets (103) beide jeweils 228,6 mm betragen.

4. Brennstab (1) nach Anspruch 3, wobei die Anreicherungen des Gadolinium-Pellets (102), des ersten Uran-Pellets (101) und des zweiten Uran-Pellets (103) alle kleiner oder gleich 5% sind.

5. Brennstab (1) nach einem der Ansprüche 1 bis 4, wobei der Massenprozentsatz an Gadolinium (III)-oxid im Gadoliniumpellet (102) 4% bis 12% beträgt.

6. Brennstoff-Baugruppe, umfassend N Brennstäbe (1) nach einem der Ansprüche 1 bis 5, wobei N eine ganze Zahl größer oder gleich 1 ist.

7. Brennstoff-Baugruppe nach Anspruch 6, wobei die Längen der ersten Uran-Pellets (101) in zwei asymmetrisch positionierten Brennstäben der N Brennstäbe unterschiedlich sind und die Längen der zweiten Uran-Pellets (103) in zwei asymmetrisch positionierten Brennstäben der N Brennstäbe unterschiedlich sind.

8. Brennstoff-Baugruppe nach Anspruch 6 oder 7, wobei der Unterschied zwischen den Anreicherungen der ersten Uran-Pellets (101) in zwei asymmetrisch positionierten Brennstäben der N Brennstäbe kleiner oder gleich 0,5% ist und der Unterschied zwischen den Anreicherungen der zweiten Uran-Pellets (103) in zwei asymmetrisch positionierten Brennstäben der N Brennstäbe kleiner oder gleich 0,5% ist.

9. Brennstoff-Baugruppe nach Anspruch 8, weiter umfassend einen Urandioxid-Brennstab, wobei ein Unterschied zwischen einer Anreicherung der N Brennstäbe (1) und einer Anreicherung des Urandioxid-Brennstabs kleiner oder gleich 0,5% ist.

## Revendications

1. Barre de combustible (1), comprenant une première pastille d'uranium (101), une pastille de gadolinium (102) et une seconde pastille d'uranium (103), dans laquelle la première pastille d'uranium (101), la pastille de gadolinium (102) et la seconde pastille d'uranium (103) sont chacune de forme cylindrique,
une face d'extrémité d'une extrémité de la pastille de gadolinium (102) est reliée à une face d'extrémité d'une extrémité de la première pastille d'uranium (101) et une face d'extrémité d'une extrémité opposée de la pastille de gadolinium (102) est reliée à une face d'extrémité d'une extrémité de la seconde pastille d'uranium (103) et
une différence entre un enrichissement de la pastille de gadolinium (102) et un enrichissement de la première pastille d'uranium (101) est 0,5 % et une différence entre un enrichissement de la pastille de gadolinium (102) et un enrichissement de la seconde pastille d'uranium (103) est 0,5 %,
dans laquelle la première pastille d'uranium (101), la pastille de gadolinium (102) et la seconde pastille d'uranium (103) sont toutes composées d'une pluralité de petites pastilles cylindriques qui sont empilées ensemble.

2. Barre de combustible (1) selon la revendication 1, dans laquelle les longueurs de la première pastille d'uranium (101) et de la seconde pastille d'uranium (103) sont toutes deux comprises entre 75 et 460 mm.

3. Barre de combustible (1) selon la revendication 2, dans laquelle les longueurs de la première pastille d'uranium (101) et de la seconde pastille d'uranium (103) font toutes deux 228,6 mm.

4. Barre de combustible (1) selon la revendication 3, dans laquelle des enrichissements de la pastille de gadolinium (102), de la première pastille d'uranium (101) et de la seconde pastille d'uranium (103) sont tous inférieurs ou égaux à 5 %.

5. Barre de combustible (1) selon l'une quelconque des revendications 1 à 4, dans laquelle un pourcentage massique d'oxyde de gadolinium (III) dans la pastille de gadolinium (102) est 4 % à 12 %.

6. Assemblage combustible, comprenant N barres de combustible (1) selon l'une quelconque des revendications 1 à 5, dans lequel N est un nombre entier supérieur ou égal à 1.

7. Assemblage combustible selon la revendication 6, dans lequel des longueurs des premières pastilles d'uranium (101) dans deux barres de combustible positionnées de manière asymétrique des N barres de combustible sont différentes et des longueurs des secondes pastilles d'uranium (103) dans deux barres de combustible positionnées de manière asymétrique des N barres de combustible sont différentes.

8. Assemblage combustible selon la revendication 6 ou 7, dans lequel une différence entre des enrichissements des premières pastilles d'uranium (101) dans deux barres de combustible positionnées de manière asymétrique des N barres de combustible est inférieure ou égale à 0,5 % et une différence entre des enrichissements des secondes pastilles d'uranium (103) dans deux barres de combustible positionnées de manière asymétrique des N barres de combustible est inférieure ou égale à 0,5 %

9. Assemblage combustible selon la revendication 8, comprenant en outre une barre de combustible de dioxyde d'uranium, dans lequel une différence entre un enrichissement des N barres de combustible (1) et un enrichissement de la barre de combustible de dioxyde d'uranium est inférieure ou égale à 0,5 %.
